# EUROPEAN PATENT APPLICATION

(11) **EP 3 793 014 A1**
(43) Date of publication of application: **17.03.2021**
(21) Application number: 20194665.4
(22) Date of filing: 04.09.2020
(51) Int. Cl.: H01M 10/0569, H01M 10/0567, H01M 10/0525, H01M 4/58, H01M 4/587, H01M 10/0587, H01M 10/44

(54) **LITHIUM-ION SECONDARY BATTERY AND PRODUCTION METHOD THEREOF**

(30) Priority: 12.09.2019 JP 2019165929
(71) Applicant: MAZDA MOTOR CORPORATION, Hiroshima 730-8670 (JP); Ube Industries, Ltd., Yamaguchi 755-8633 (JP); Eliiy Power Co., Ltd., Tokyo 141-0032 (JP)
(72) Inventor: SHIMAMOTO, Kei, Osaka, 592-8543 (JP); FUKUNAGA, Takao, Tokyo, 141-0032 (JP); SUGIYAMA, Hideyuki, Tokyo, 141-0032 (JP); MASUDA, Wataru, Hiroshima, 730-8670 (JP); FUJITA, Hiroki, Hiroshima, 730-8670 (JP); HIGUCHI, Munetaka, Hiroshima, 730-8670 (JP)
(74) Representative: Behr, Wolfgang

(57) **Abstract**

A lithium ion secondary battery includes: a positive electrode 8 having a positive electrode active material layer 12 on a surface of a positive electrode collector 11; a negative electrode 9 having a negative electrode active material layer 15 on a surface of a negative electrode collector 14; and a nonaqueous electrolyte 17. The positive electrode 8, the negative electrode 9, and the nonaqueous electrolyte 17 are accommodated in a battery case. The nonaqueous electrolyte 17 contains γ-butyrolactone as a main component of a nonaqueous solvent. A BOB ion-derived coating film 13 is formed on the surface of the positive electrode active material layer 12. A VC-derived coating film 16 is formed on the surface of the negative electrode active material layer 15.

## Description

### BACKGROUND

The present invention relates to a lithium ion secondary battery and a production method thereof.

A lithium ion secondary battery mainly includes: a positive electrode and a negative electrode which store and release lithium; a nonaqueous electrolyte; and a separator, and is used, for example, in electronic devices such as mobile phones and personal computers, and electronic vehicles. The nonaqueous electrolyte is obtained by dissolving a lithium salt in a nonaqueous solvent such as ethylene carbonate, propylene carbonate, and dimethyl carbonate. Such lithium ion secondary batteries involve problems of volatilization of flammable nonaqueous solvents and release of oxygen due to degradation of a lithium composite oxide used as a positive electrode active material at high temperatures.

To address these problems, Japanese Unexamined Patent Publication No. 2000-243447 discloses using, as a nonaqueous solvent of the lithium ion secondary battery, a solvent mixture of ethylene carbonate, propylene carbonate, and γ-butyrolactone, each of which has a high boiling point.

### SUMMARY

γ-butyrolactone is effective in increasing a flash point of the lithium ion secondary battery. However, according to the study of the present inventors, it was found that γ-butyrolactone is degraded on the negative electrode and that the output of the battery decreases due to the degradation product. It is considered that the degradation product moves to the positive electrode, and Li ions are inhibited from entering and exiting to and from the positive electrode.

Therefore, an object of the present invention is to achieve both an increase in the flash point of a lithium ion secondary battery and an improvement in durability of the lithium ion secondary battery, and in particular, to ensure outputs of the lithium ion secondary battery in cold circumstances for a long period of time.

In order to solve the above problems, according to the present invention, γ-butyrolactone is used as a nonaqueous solvent, and a coat is formed on each of positive and negative electrodes to reduce degradation of the γ-butyrolactone on the negative electrode and deterioration of the positive electrode due to a degradation product of the γ-butyrolactone.

A lithium ion secondary battery disclosed herein is a lithium ion secondary battery including: a positive electrode having a positive electrode active material layer on a surface of a positive electrode collector; a negative electrode having a negative electrode active material layer on a surface of a negative electrode collector; and a nonaqueous electrolyte, the positive electrode, the negative electrode, and the nonaqueous electrolyte being accommodated in a battery case, wherein the nonaqueous electrolyte contains γ-butyrolactone (hereinafter "GBL") as a main component of a nonaqueous solvent, a vinylene carbonate (hereinafter "VC")-derived coat (SEI layer) is formed on the surface of the negative electrode active material layer, and a bis(oxalate)borate (hereinafter "BOB")-derived coat is formed on the surface of the positive electrode active material layer.

With this configuration, the nonaqueous electrolyte contains GBL as a main component of the nonaqueous solvent. The GBL is a high-dielectric constant solvent having a large intermolecular bonding force. The GBL also has a low melting point and stays liquid even at low temperatures. The nonaqueous electrolyte containing GBL is therefore advantageous in increasing the flash point of the lithium ion secondary battery and improving outputs of the lithium ion secondary battery in cold circumstances.

The VC-derived coat formed on the surface of the negative electrode active material layer prevents the reduction and degradation of the GBL on the negative electrode. Even if a degradation product of the GBL generated on the negative electrode moves to the positive electrode, the BOB ion-derived coat formed on the surface of the positive electrode active material layer prevents deterioration of the positive electrode due to the degradation product. Oxidation and degradation of the GBL on the positive electrode are also prevented.

In this manner, according to the present invention, the presence of the VC-derived coat on the negative electrode active material layer and the BOB ion-derived coat on the positive electrode active material layer makes it possible to reduce the cycle deterioration and the storage deterioration of the lithium ion secondary battery including the nonaqueous electrolyte that contains GBL as a main component of the nonaqueous solvent. For example, the lithium ion secondary battery can ensure high output properties for a long period of time even when used under circumstances at -30°C.

In one embodiment, the positive electrode contains lithium iron phosphate having an olivine crystal structure as the positive electrode active material. This is advantageous in ensuring thermal stability in charging the lithium ion secondary battery, and can increase a discharge voltage. In this case, since the BOB ion-derived coat protects the positive electrode active material layer from the degradation product of GBL, degradation of lithium iron phosphate (elution of Fe) is prevented.

In one embodiment, the negative electrode contains a carbon material as the negative electrode active material. This is advantageous in increasing the battery capacity.

If GBL is employed as a nonaqueous solvent with the use of a graphite-based carbon material as a negative electrode active material, a solid electrolyte interface (SEI) layer is less prone to be formed, which is a problem. The SEI layer is formed by reduction and degradation of the solvent in the electrolyte while charging, and solvated Li ions are de-solvated when passing through the SEI layer and are then inserted between graphite layers individually. If the formation of the SEI layer is insufficient, the solvated Li ions are inserted directly between the graphite layers (co-insertion), the degradation reaction of the solvent proceeds between the graphite layers, and the crystal structure of graphite is broken, thereby reducing the cycle stability performance of the battery.

In contrast, in the present embodiment, the solvated Li ions are de-solvated efficiently through the VC-derived coat (SEI layer), and the degradation reaction of the solvent between the graphite layers is substantially prevented, thereby improving the cycle stability performance.

For example, from the viewpoint of reducing degradation of GBL, it is preferable to use, as a negative electrode active material, a carbon material having a low graphitization degree, such as hard carbon (for example, 0.015 rad or more as a half-power band width of a diffraction peak at a diffraction angle 2θ = 26.6° using a CuKα ray).

In one embodiment, the nonaqueous electrolyte contains, as the nonaqueous solvent, dibutyl carbonate (hereinafter "DBC") in addition to the GBL. Although GBL has a high viscosity, which causes poor wettability to the separator, the addition of DBC improves wettability of the nonaqueous electrolyte to the separator. This contributes to an increase in ion conductivity and is advantageous in improving output properties of the lithium ion secondary battery. Moreover, DBC has a high boiling point (about 206°C) and is thus preferred from the viewpoint of reducing volatilization of the nonaqueous solvent. As the DBC, n-DBC having a high flash point (91°C) can be suitably employed.

The nonaqueous solvent may contain ethylene carbonate (hereinafter "EC") in addition to GBL and DBC, or may contain EC and propylene carbonate (hereinafter "PC"). The addition of EC or PC that is a high boiling point, high dielectric constant solvent advantageously increases the flash point of the lithium ion secondary battery and improves outputs of the lithium ion secondary battery in cold circumstances.

In the case where the nonaqueous solvent is a solvent mixture as described above, the concentration of the GBL in the nonaqueous solvent is set to be 50 vol% or more. In this case, the concentration of the DBC is suitably 5 vol% or more to 15 vol% or less. If EC or PC is added, each concentration is suitably 5 vol% or more to 30 vol% or less. If both of EC and PC are added, the concentration of the EC and PC together is 10 vol% or more to 40 vol% or less.

A production method of a lithium ion secondary battery disclosed herein is a production method of a lithium ion secondary battery including: a positive electrode having a positive electrode active material layer on a surface of a positive electrode collector; a negative electrode having a negative electrode active material layer on a surface of a negative electrode collector; and a nonaqueous electrolyte, the positive electrode, the negative electrode, and the nonaqueous electrolyte are accommodated in a battery case, the method including: accommodating the positive electrode and the negative electrode in the battery case and further encapsulating the nonaqueous electrolyte into the battery case and sealing the battery case, thereby obtaining a battery assembly, the nonaqueous electrolyte being obtained by dissolving a lithium salt in a nonaqueous solvent containing GBL as a main component and containing VC and LiBOB, and subjecting the battery assembly to an initial charge process, thereby forming a coat derived from the VC on the surface of the negative electrode active material layer and forming, on the surface of the positive electrode active material layer, a coat derived from the BOB ions generated by ionization of the LiBOB.

The above-described lithium ion secondary battery can be obtained by this production method. According to this production method, it is not only that the BOB ion-derived coat is formed on the surface of the positive electrode active material layer, but also that the VC-derived coat on the surface of the negative electrode active material layer is strengthened due to the degradation of the BOB ions on the negative electrode.

The concentration of VC in the nonaqueous electrolyte is preferably 0.3 mass% or more from the viewpoint of forming a coat (SEI layer) capable of reducing reduction and degradation of GBL on the surface of the negative electrode active material layer. However, the concentration of the VC is preferably 3 mass% or less because a VC-derived coat having a larger thickness causes greater resistance in insertion and desorption of Li ions to and from the negative electrode active material. The concentration of the VC is more preferably 0.5 mass% or more to 2.5 mass% or less, and still more preferably 1 mass% or more to 2 mass% or less.

The concentration of LiBOB in the nonaqueous electrolyte is preferably 0.3 mass% or more from the viewpoint of forming, on the surface of the positive electrode active material layer, a coat suitable for protecting the positive electrode active material. However, the concentration of the LiBOB is preferably 1.5 mass% or less because a BOB ion-derived coat having a larger thickness causes greater resistance in insertion and desorption of Li ions to and from the positive electrode active material. The concentration of the LiBOB is more preferably 0.5 mass% or more to 1 mass% or less.

### BRIEF DESCRIPTION OF THE DRAWINGS

FIG. 1 is a diagram illustrating a perspective view of an internal structure of a lithium ion secondary battery, part of which is cut open.
FIG. 2 is a diagram schematically illustrating a cross-sectional view of a stacked structure of positive and negative electrodes of the lithium ion secondary battery.
FIG. 3 is a graph showing cycle deterioration characteristics of discharge capacity.
FIG. 4 is a graph showing cycle deterioration characteristics of a discharge capacity maintenance rate.
FIG. 5 is a graph showing cycle deterioration characteristics of a maximum current value at -30°C.
FIG. 6 is a graph showing cycle deterioration characteristics of a maintenance rate of the maximum current value at -30°C.
FIG. 7 is a graph showing the storage deterioration characteristics of the discharge capacity.
FIG. 8 is a graph showing storage deterioration characteristics of the discharge capacity maintenance rate.
FIG. 9 is a graph showing storage deterioration characteristics of the maximum current value at -30°C.
FIG. 10 is a graph showing storage deterioration characteristics of the maintenance rate of the maximum current value at -30°C.

### DETAILED DESCRIPTION

An embodiment of the present invention will be described with reference to the drawings. The following description of a preferred embodiment is merely illustrative in nature and is not intended to limit the present invention and applications or uses thereof.

A lithium ion secondary battery according to the present embodiment is suitable for use in an electronic device, an electric vehicle, a hybrid vehicle, and the like.

### <General Configuration of Lithium Ion Secondary Battery>

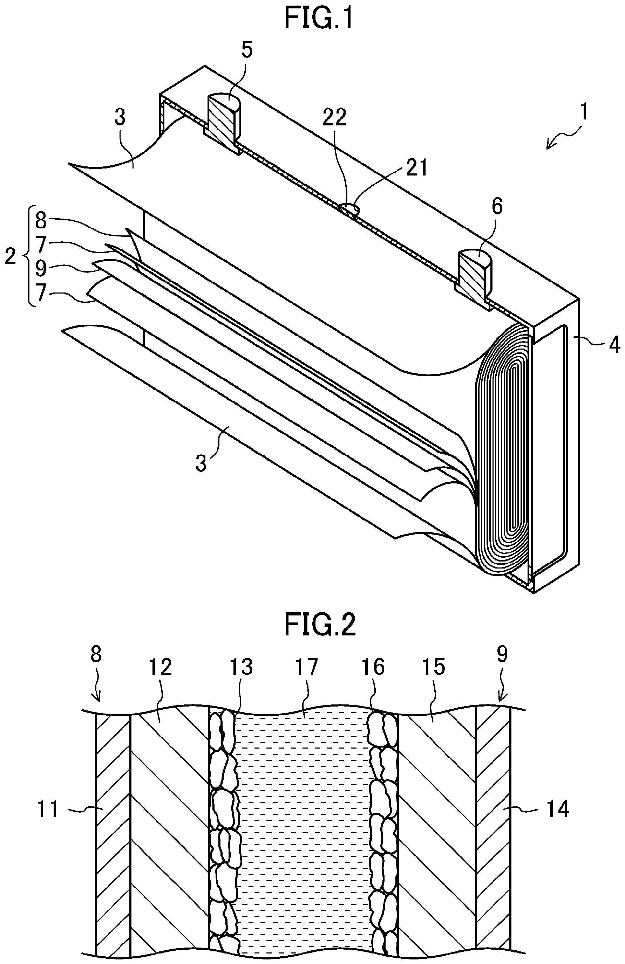

As illustrated in FIG. 1, the lithium ion secondary battery 1 includes a wound body 2 in which a plurality of thin sheet-like battery components are wound together into a flat spiral shape (like a roll of fabric), an insulating sheet 3 that covers the outer periphery of the wound body 2, and a battery case 4 that accommodates these components of the battery. A positive electrode terminal 5 and a negative electrode terminal 6 are provided on an upper surface of the battery case 4.

The wound body 2 includes two sheet-like separators 7, a sheet-like positive electrode 8 connected to the positive electrode terminal 5, and a sheet-like negative electrode 9 connected to the negative electrode terminal 6. The wound body 2 is formed by winding, into a flat spiral shape, a stacked body obtained by stacking one of the separators 7, the negative electrode 9, the other separator 7, and the positive electrode 8 in this order.

The separator 7 is impregnated with a nonaqueous electrolyte. The nonaqueous electrolyte is obtained by dissolving a Li salt in a nonaqueous solvent containing GBL as a main component. The upper surface of the battery case 4 has an inlet 21 for the nonaqueous electrolyte. The inlet 21 is closed with a stopper 22.

Note that the battery components may be a stacked body obtained by layering and folding sheet-like battery components in a zigzag shape, instead of a form of a wound body. The battery components in the form of the stacked body can be arranged up to a corner of the space in the battery case, which increases the capacity of the battery.

### [Positive Electrode 8]

As illustrated in FIG. 2, the positive electrode 8 is formed by providing a positive electrode active material layer 12 on a surface of a positive electrode collector 11 (a surface opposite to the negative electrode 9). The collector 11 is made of a metal thin film having electrical conductivity. A preferred collector 11 can be an aluminum foil. The positive electrode active material layer 12 is formed by mixing a positive electrode active material and assistants (a binder and a conductive assistant) and then applying the mixture to the collector 11.

A preferred positive electrode active material includes: a composite metal oxide of lithium and one or more kinds selected from the group consisting of cobalt, manganese, and nickel; a phosphoric acid-based lithium compound; and a silicic acid-based lithium compound. In particular, a phosphoric acid-based lithium is suitably employed. These positive electrode active materials may be used alone or in a combination of two or more of them.

Examples of a preferred phosphoric acid-based lithium compound include LiMPO₄ (M = transition metal Fe, Co, Ni, Mn, and the like) having an olivine crystal structure and Li₂MPO₄F (M = transition metal Fe, Co, Ni, Mn, and the like). Among these, lithium iron phosphate LiFePO₄ is preferred. Examples of the silicic acid-based lithium compound include Li₂MSiO₄ (M = transition metal Fe, Co, Ni, Mn, and the like).

As the binder, polyvinylidene fluoride (PVdF) can be suitably employed. As the conductive assistant, any of carbon black, acetylene black, carbon nanofibers (CNFs), and the like can be employed.

A BOB ion-derived coat 13 in contact with the nonaqueous electrolyte 17 is formed on a surface of the positive electrode active material layer 12. The separators 7 are omitted in FIG. 2.

### [Negative Electrode 9]

The negative electrode 9 is formed by providing a negative electrode active material layer 15 on a surface of a negative electrode collector 14 (a surface opposite to the positive electrode 8). The collector 14 is made of a metal thin film having electrical conductivity. A preferred collector 14 includes a copper foil. The negative electrode active material layer 15 is formed by mixing a negative electrode active material and assistants (a binder and a conductive assistant) and then applying the mixture to the collector 14.

As the negative electrode active material, a graphite-based carbon material such as artificial graphite or natural graphite can be suitably employed. As the graphite-based carbon material, one having a low graphitization degree is preferred from the viewpoint of improving an ability of storing and releasing lithium ions. For example, the graphitization degree of the graphite-based carbon material is preferably 0.015 rad or more as a half-power band width of a diffraction peak at a diffraction angle 2θ = 26.6° using a CuKα ray. Artificial graphite and hard carbon, each of which has a low graphitization degree, are suitable as a negative electrode active material. Natural graphite alone has high crystallinity, thereby easily deteriorated. Thus, surface-treated natural graphite and artificial graphite are suitably used in combination.

As the binder, styrene-butadiene rubber (SBR), a combination (SBR-CMC) of styrene-butadiene rubber (SBR) and carboxymethylcellulose as a thickener, PVdF, an imide-based binder, a polyacrylic acid-based binder, or the like may be suitably employed. As the conductive assistant, carbon black, acetylene black, carbon nanofibers (CNFs), or the like can be suitably employed.

A VC-derived coat (SEI layer) 16 in contact with the nonaqueous electrolyte 17 is formed on a surface of the negative electrode active material layer 15.

### [Separator 7]

The separator 7 is a porous thin film made of a synthetic resin, such as polyethylene and polypropylene, and is impregnated with the nonaqueous electrolyte 17.

### [Nonaqueous Electrolyte]

The nonaqueous electrolyte is obtained by dissolving a lithium salt (support electrolyte) in a nonaqueous solvent containing GBL as a main component. The nonaqueous electrolyte is a liquid at -40°C to 70°C, and an additive is added thereto as required.

The nonaqueous solvent may be a solvent mixture that contains, in addition to GBL, one or more kinds selected from various organic solvents including cyclic carbonates such as EC and PC, cyclic esters such as γ-valerolactone (GVL), chain carbonates such as DBC, ethers, sulfones, and the like.

DBC improves wettability of the nonaqueous electrolyte to the separators 7. Such a wettability improving solvent can be, for example, methylbutyl carbonate (MBC) and ethylbutyl carbonate (EBC). Among them, n-DBC having a high flash point (91°C) is suitably employed. The concentration of the wettability improving solvent in the nonaqueous solvent may be set to be 5 vol% or more to 15 vol% or less.

A preferred example of the solvent mixture is a solvent mixture of GBL, EC and/or PC, and DBC. In this solvent mixture, the following volume percentages of the respective substances are particularly suitable: the concentration of GBL is 50 vol% or more; if EC or PC is added alone, each concentration is 5 vol% or more to 30 vol% or less; if both of EC and PC are added, the concentration of the EC and PC together is 10 vol% or more to 40 vol% or less; and the concentration of DBC is 5 vol% or more to 15 vol% or less.

A preferred lithium salt includes one or more of LiPF₆, LiBF₄, LiPO₂F₂, LiN(SO₂F)₂, LiN(SO₂CF₃)₂, and LiN(SO₂C₂F₅)₂. The lithium salts may be used alone or in a combination of two or more of them. The concentration of the lithium salt in the nonaqueous electrolyte may be, for example, 0.5M or more to 2.0M or less.

In addition, in assembling of the lithium ion secondary battery, the nonaqueous electrolyte contains LiBOB for forming the BOB ion-derived coat 13 on the surface of the positive electrode active material layer 12, and VC for forming the VC-derived coat (SEI layer) 16 on the surface of the negative electrode active material layer 15. Most of the BOB ions and the VC are consumed in the formation of the coats 13 and 16 by an initial charge process, but partially remain in the nonaqueous electrolyte even after the initial charge process. In some cases, the BOB ions or the VC do not remain in the nonaqueous electrolyte.

### <Problem of GBL Degradation>

If the negative electrode 9 has a defective SEI layer formed thereon, a reduction and degradation reaction of the GBL in the nonaqueous electrolyte occurs on the negative electrode 9 in charging of the lithium ion secondary battery 1. Alternatively, when the battery 1 is overdischarged, the collector (copper) 14 of the negative electrode 9 dissolves in the nonaqueous electrolyte 17, and a reduction and degradation reaction of the GBL occurs in the negative electrode 9.

Degradation products of the GBL, when diffused in the nonaqueous electrolyte 17, inhibit regeneration of the normal SEI layer nearby, and cause clogging of the separator 7. As a result, the cycle characteristics of the battery 1 deteriorate due to the formation of the defect SEI layer and the inhibition of the movement of the Li ions passing through the separator 7. Further, when the degradation products of the GBL move to the positive electrode 8, the binder of the positive electrode active material layer 12 is degraded and the positive electrode active material is eluted, which deteriorates the trapping property of Li ions in the positive electrode 8.

### <Measures against GBL Degradation>

According to the present embodiment, to address the problem of the GBL degradation, the BOB ion-derived coat 13 is formed on the surface of the positive electrode active material layer 12, and the VC-derived coat (SEI layer) 16 is formed on the surface of the negative electrode active material layer 15, as described above.

The BOB ion-derived coat 13 is generated in initial charging, which will be described later, of the lithium ion secondary battery. Although the specific mechanism of the generation of the coat 13 is unknown, it is assumed that the BOB ions in the nonaqueous electrolyte are oxidized, degraded, and polymerized, thereby generating the coat 13. The term "BOB ion-derived coat" 13 used herein expresses that the coat contains a component derived from BOB ions, and the coat 13 may contains a degradation product produced by the initial charging of another solvent or a supporting electrolyte of the nonaqueous electrolyte which is not derived from the BOB ions.

The VC-derived coat 16 is generated in initial charging, which will be described later, of the lithium ion secondary battery. Although the specific mechanism of the generation of the coat 16 is unknown, it is assumed that the VC in the nonaqueous electrolyte is reduced, degraded, and polymerized, thereby generating the coat 16. The term "VC-derived coat" 16 used herein expresses that the coat 16 contains a component derived from VC, and the coat 16 may include a degradation product produced by the initial charging of another solvent or a supporting electrolyte of the nonaqueous electrolyte which is not derived from the VC.

The VC-derived coat 16 covering the surface of the negative electrode active material layer 15 reduces the reduction and degradation, on the negative electrode, of the GBL in the nonaqueous electrolyte. If the GBL is degraded on the negative electrode, the degradation products are diffused toward the positive electrode. However, the surface of the positive electrode active material layer 12 is covered with the BOB ion-derived coat 13. The BOB ion-derived coat 13 therefore prevents the battery output decrease caused by the broken binder of the positive electrode active material layer 12 which is broken by the degradation products of the GBL. In addition, the BOB ion-derived coat 13 is advantageous in maintaining the cycle characteristics because the BOB ion-derived coat 13 does not inhibit the Li ions from being inserted into and desorbed from the crystal structure of the positive electrode active material.

### <Production Method of Lithium Ion Secondary Battery>

The above lithium ion secondary battery can be produced by a method including the following steps.

### [Battery Assembly Step]

A positive electrode active material and assistants (a binder and a conductive assistant) are kneaded to prepare a mixture in a slurry form. The mixture is applied to a collector 11 and dried, thereby forming a sheet-like positive electrode 8 in which the positive electrode active material layer 12 is formed on a surface of the collector 11.

A negative electrode active material and assistants (a binder and a conductive assistant) are kneaded to prepare a mixture in a slurry form. The mixture is applied to a collector 14 and dried, thereby forming a sheet-like negative electrode 9 in which the negative electrode active material layer 15 is formed on a surface of the collector 14.

The sheet-like positive and negative electrodes 8 and 9 are stacked on each other, with a separator 7 interposed between the positive and negative electrodes 8 and 9, thereby obtaining an electrode element. Positive and negative leads are attached to the electrode element, and this electrode element is accommodated in a battery case 4.

A nonaqueous electrolyte, which is obtained by dissolving a Li salt in a nonaqueous solvent containing GBL as a main component, is introduced into the battery case 4 from an inlet 21. The inlet 21 is sealed with a stopper 22, thereby obtaining a battery assembly. LiBOB and VC are previously added to the nonaqueous electrolyte.

### [Initial Charge (Pre-Charge) Process]

The battery assembly is subjected to an initial charge process, thereby forming coats 13 and 16. The initial charge is performed such that the electric potential of the negative electrode 9 is equal to or below the reduction potential of VC. As the charging process, either a constant-current (CC) charge process or a constant-current constant-voltage (CCCV) charge process in which constant-current charge is followed by constant-voltage charge may be employed.

The initial charge process brings, on the surface of the positive electrode active material layer 12, the coat 13 derived from BOB ions to be generated by ionization of the LiBOB, and the VC-derived coat 16 on the surface of the negative electrode active material layer 15.

The gas generated in association with the formation of the coats 13 and 16 by the initial charge process is removed from the battery case.

### [Full Charge Process and Aging Process]

After the initial charge process, the lithium ion secondary battery is full charged to its upper limit voltage. The initial discharge capacity is checked and then an aging process for checking the presence or absence of a battery failure is performed on the lithium ion secondary battery.

### <Characteristic Test of Lithium Ion Secondary Battery>

Lithium ion secondary batteries according to the respective samples having the compositions of the nonaqueous electrolyte shown in Table 1 were produced in accordance with the above-described production method.

**[Table 1]**

| | Li Salt (mol) | Solvent (vol%) | | | | Additive (mass%) | |
|---|---|---|---|---|---|---|---|
| | LiPF₆ | EC | PC | GBL | DBC | VC | LiBOB |
| Sample 1 | 1 | 20 | 0 | 70 | 10 | 1.0 | 0 |
| Sample 2 | 1 | 10 | 10 | 70 | 10 | 1.0 | 0 |
| Sample 3 | 1 | 20 | 0 | 70 | 10 | 2.0 | 0 |
| Sample 4 | 1 | 20 | 0 | 70 | 10 | 3.0 | 0 |
| Sample 5 | 1 | 20 | 0 | 70 | 10 | 1.0 | 0.5 |
| Sample 6 | 1 | 20 | 0 | 70 | 10 | 2.0 | 0.5 |
| Sample 7 | 1 | 20 | 0 | 70 | 10 | 1.0 | 1.0 |
| Sample 8 | 1 | 10 | 10 | 70 | 10 | 2.0 | 0.5 |
| Sample 9 | 1 | 10 | 10 | 70 | 10 | 1.0 | 1.0 |

LiFePO₄ (positive electrode active material) and carbon black (conductive assistant) were mixed, and a binder solution previously obtained by dissolving PVdF (binder) was then added to the mixture and mixed. Thus, a positive electrode mixture in the form of paste was prepared. This positive electrode mixture was applied to a surface of an aluminum foil (collector), then dried, and pressurized. Thus, a positive electrode was produced. Hard carbon (negative electrode active material) and carbon black (conductive assistant) were mixed, and a binder solution previously obtained by dissolving SBR-CMC (binder) was then added to the mixture and mixed. Thus, a negative electrode mixture in the form of paste was prepared. This negative electrode mixture was applied to a surface of a copper foil (collector), then dried, and pressurized. Thus, a negative electrode was produced. The positive electrode, a microporous polypropylene film (separator), and the negative electrode were stacked in this order, and an electrolyte (support electrolyte; LiPF₆ = 1M) containing each nonaqueous solvent in composition described in Table 1 was added to the stacked body. Thus, each sample (full cell) for characteristic evaluation was produced.

Then, for each sample, a cycle deterioration test (measurement of a capacity maintenance rate and a maintenance rate of the maximum current at -30°C) and a storage deterioration test (measurement of the capacity maintenance rate and the maintenance rate of the maximum current value at -30°C) were carried out.

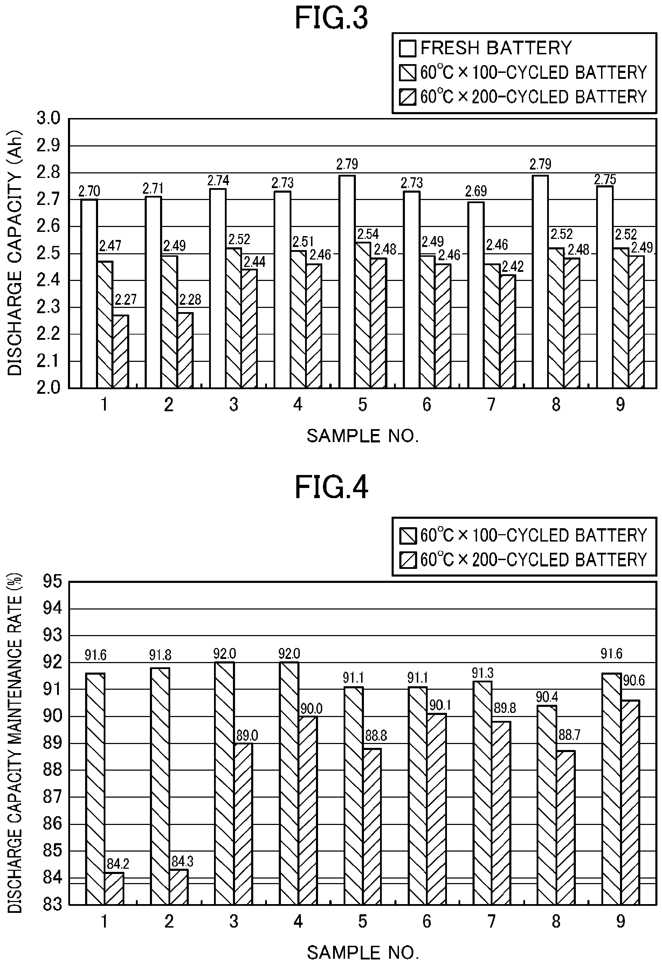

FIGS. 3 to 6 show the results of the cycle deterioration tests. Conditions for the cycle deterioration tests are as follows. That is, the battery temperature was 60°C; the battery capacity was 3 Ah; the depth of discharge (DOD) was 100%; and the charge and discharge conditions were 1C.

FIG. 3 shows the discharge capacities when the battery was discharged at 3A at a battery temperature of 25°C before and after the cycle deterioration test, and FIG. 4 shows the maintenance rate of the discharge capacity.

Comparison among Samples 1, 3 and 4 (the VC amount are greater in this order) shows that the greater VC amount tends to increase the discharge capacity and the maintenance rate of the discharge capacity, as well, and reduces the cycle deterioration. However, the degree of the reduction in cycle deterioration is lowered if a greater amount of VC is added (Sample 4).

Comparison between Samples 1 and 5 shows that Sample 5, in which LiBOB was added, exhibits a higher maintenance rate of discharge capacity for a 200-cycled battery. The same results were obtained in the comparison between Samples 2 and 9 (in which EC was partially replaced with PC, and LiBOB was added in the latter sample) and the comparison between Samples 3 and 6 (in which VC was 2 mass%, and LiBOB was added in the latter sample). That is, Samples 9 and 6, in which LiBOB was added, exhibit higher maintenance rates of discharge capacity.

Samples 5 to 9, in which LiBOB was added, exhibit a relatively stable decrease in the discharge capacity in the course of the cycle.

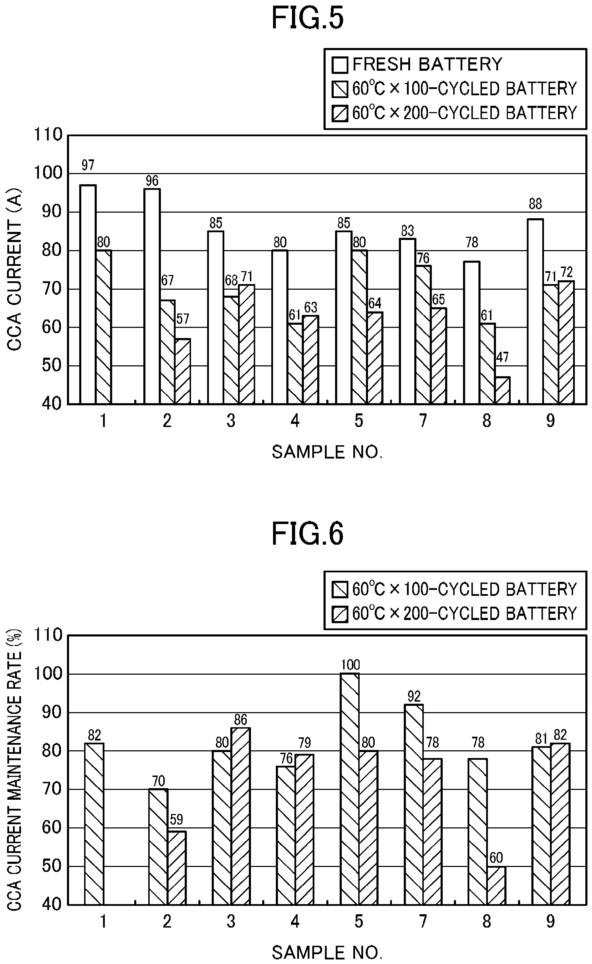

Comparison between Samples 1 and 2 (in which VC = 1.0 mass%, and EC was partially replaced with PC in the latter sample), Samples 6 and 8 (in which VC = 2.0 mass%, LiBOB = 0.5 mass%, and EC was partially replaced with PC in the latter sample), and Samples 7 and 9 (in which VC = 1.0 mass%, LiBOB = 1.0 mass%, and EC was partially replaced with PC in the latter sample) shows that there is no significant change in the maintenance rate of discharge capacity even if EC in the nonaqueous solvent is partially replaced with PC. FIG. 5 shows the maximum currents at -30°C before and after the cycle deterioration test, and FIG. 6 shows the maintenance rate of the maximum current. This maximum current is a maximum current (calculated based on two points at 30A and 50A) at 1.5V and 0.1 seconds from a constant current discharge from 100% of SOC at a battery temperature of -30°C. Note that the 200-cycled battery of Sample 1 has its voltage equal to or below 1.5 V at 0.1 seconds at 50 A, and therefore, the maximum current value for the battery cannot be obtained.

Samples 1, 3 and 4 (the VC amount were greater in this order) show that Samples 3 and 4, as compared with Sample 1, achieve reductions in the cycle deterioration, but that Sample 4 (VC = 3.0 mass%) exhibits a lower degree of reduction in the cycle deterioration, as compared with Sample 3 (VC = 2.0 mass%). This demonstrates that it is not preferable to add an excessive amount of VC.

Comparison between Samples 1 and 5 (in which VC = 1.0 mass%, and LiBOB was added in the latter sample) shows that Sample 5, in which LiBOB was added, exhibits a higher maintenance rate of the maximum current. The same result was obtained in the comparison between Samples 2 and 9 (in which EC was partially replaced with PC, and LiBOB was added in the latter sample). That is, Sample 9, in which LiBOB was added, exhibits a higher maintenance rate of the maximum current. This demonstrates that the cycle deterioration is reduced by the addition of LiBOB.

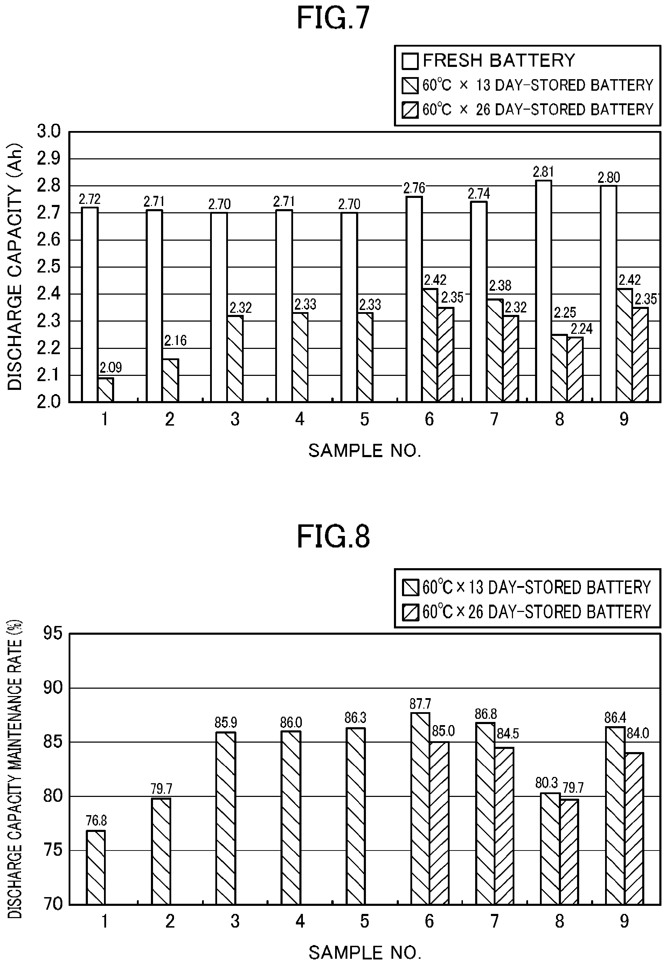

FIGS. 7 to 10 show the results of the storage deterioration tests. The storage deterioration test uses a battery stored at a temperature of 60°C to examine the discharge capacity and the maximum current value of the battery at -30°C after a lapse of 13 days and a lapse of 26 days.

FIG. 7 shows the discharge capacity when the battery was discharged at 3A at a battery temperature of 25°C before and after the storage deterioration test, and FIG. 8 shows the maintenance rate of the discharge capacity. Conditions for measuring the discharge capacity are the same as those in the cycle deterioration test.

Comparison among Samples 1, 3 and 4 (the VC amount are greater in this order) shows that the greater VC amount tends to increase the maintenance rate of the discharge capacity and reduces the cycle deterioration. However, the degree of the reduction in the cycle deterioration is lowered if a greater amount of VC is added (Sample 4).

Comparison between Samples 1 and 5 shows that Sample 5, in which LiBOB was added, exhibits a higher maintenance rate of discharge capacity for a battery stored for 13 days. The same results were obtained in the comparison between Samples 2 and 9 (in which EC was partially replaced with PC, and LiBOB was added in the latter sample) and the comparison between Samples 3 and 6 (in which VC was 2 mass%, and LiBOB was added in the latter sample). That is, Samples 9 and 6, in which LiBOB was added, exhibit higher maintenance rates of discharge capacity.

Samples 6 to 9, in which LiBOB was added, exhibit a relatively stable decrease in the discharge capacity in the course of the storage.

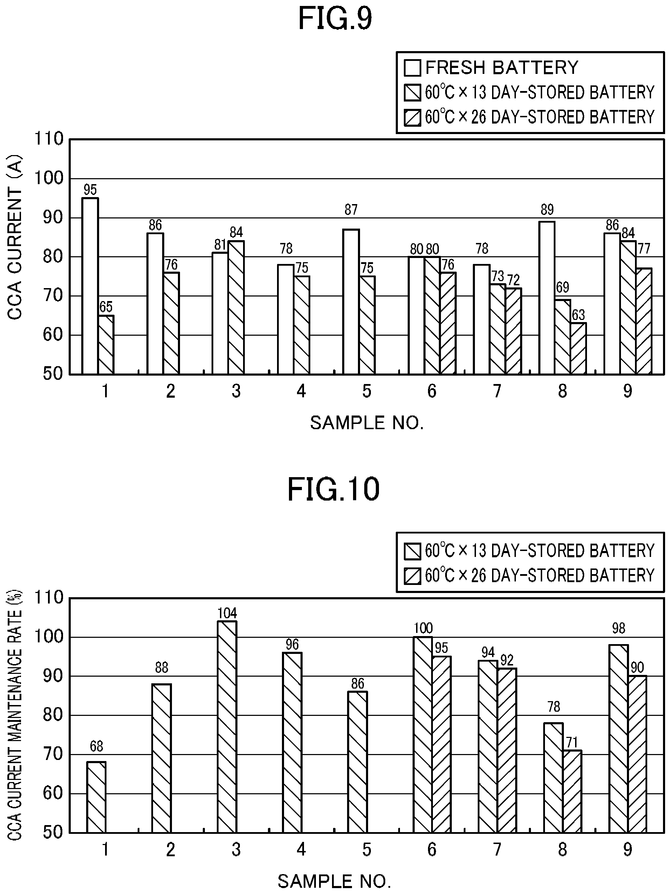

FIG. 9 shows the maximum current values at -30°C before and after the storage deterioration test, and FIG. 10 shows the maintenance rate of the maximum current. Conditions for calculating the maximum current values are the same as those in the cycle deterioration test.

Samples 1, 3 and 4 (the VC amount were greater in this order) show that Samples 3 and 4, as compared with Sample 1, achieve reductions in the storage deterioration. However, Sample 3 (VC = 2.0 mass%) shows a higher maximum current value for the battery stored for 13 days than for a fresh battery, which means that the battery characteristics are unstable in Sample 3.

Comparison between Samples 1 and 5 (in which VC = 1.0 mass%, and LiBOB was added in the latter sample) shows that Sample 5, in which LiBOB was added, exhibits a higher maintenance rate of the maximum current. The same result was obtained in the comparison between Samples 2 and 9 (in which EC was partially replaced with PC, and LiBOB was added in the latter sample). That is, Sample 9, in which LiBOB was added, exhibits a higher maintenance rate of the maximum current. This demonstrates that the storage deterioration is reduced by the addition of LiBOB.

Samples 6 to 9, in which LiBOB was added, exhibit a relatively stable decrease in the maximum current in the course of the storage.

As described above, the nonaqueous electrolyte containing VC and LiBOB added reduces the cycle deterioration of the discharge capacity and the maximum current, and also reduces the storage deterioration of the discharge capacity and the maximum current. It is considered that such reductions are due to the formation of the VC-derived coat on the surface of the negative electrode active material layer and the formation of the BOB ion-derived coat on the surface of the positive electrode active material layer. Besides, the storage capacity and the maximum current decrease in a relatively stable manner in the course of the cycle and storage.

It is confirmed by the analysis of the negative electrode that the positive electrode active material is protected by the BOB ion-derived coat. Specifically, in Samples 1 to 4, in which LiBOB was not added, precipitation of Fe was observed on the negative electrode. In contrast, in Samples 5 to 9, in which LiBOB was added, precipitation of Fe was not observed on the negative electrode. The precipitation of Fe on the negative electrode in Sample 1 to 4 is due to the elution of LiFePO₄ as the positive electrode active material in the nonaqueous electrolyte. It is considered that the precipitation of Fe was not observed on the negative electrode in Samples 5 to 9 because the LiBOB-derived coat was formed on the surface of the positive electrode active material layer, and this coat protected the positive electrode active material.

The electrolyte of each Sample contains DBC in addition to EC and GBL as nonaqueous solvents. Without DBC, the electrolyte was not smoothly introduced and the cycle life of the thus-obtained battery was short. This is because the electrolyte that does not contain DBC has poor wettability to the separator. In fact, it was confirmed that when an electrolyte containing EC and GBL and not containing DBC was added dropwise onto the separator, the contact angle was large and the wettability was poor.

In each Sample, on the other hand, the electrolyte was smoothly introduced and the battery could withstand the cycle test. This is because the addition of DBC to the nonaqueous electrolyte improves the wettability to the separator. That is, if GBL having a high viscosity is employed as a nonaqueous solvent of an electrolyte, DBC can be suitably added to improve the wettability to the separator.

Further, the flash point of the electrolyte of Sample 7 measured by a Cleveland open-cup apparatus was 103°C. It was therefore confirmed that the nonaqueous electrolyte containing GBL as a main component had a high flash point.

As described above, the lithium ion secondary battery according to the embodiment is expected to exhibit good start-up properties at low temperatures for a long period of time when used as an alternative battery for a 12V lead battery and as a battery in a motor for starting an engine.

## Claims

1. A lithium ion secondary battery including: a positive electrode having a positive electrode active material layer on a surface of a positive electrode collector; a negative electrode having a negative electrode active material layer on a surface of a negative electrode collector; and a nonaqueous electrolyte, the positive electrode, the negative electrode, and the nonaqueous electrolyte being accommodated in a battery case, wherein
the nonaqueous electrolyte contains γ-butyrolactone as a main component of a nonaqueous solvent,
a vinylene carbonate-derived coat is formed on the surface of the negative electrode active material layer, and
a bis(oxalate)borate ion-derived coat is formed on the surface of the positive electrode active material layer.

2. The battery of claim 1, wherein
the positive electrode contains lithium iron phosphate having an olivine crystal structure as the positive electrode active material.

3. The battery of claim 1 or 2, wherein
the negative electrode contains a carbon material as the negative electrode active material.

4. The battery of any one of claims 1 to 3, wherein
the nonaqueous electrolyte contains, as the nonaqueous solvent, dibutyl carbonate in addition to the γ-butyrolactone.

5. A production method of a lithium ion secondary battery including: a positive electrode having a positive electrode active material layer on a surface of a positive electrode collector; a negative electrode having a negative electrode active material layer on a surface of a negative electrode collector; and a nonaqueous electrolyte, the positive electrode, the negative electrode, and the nonaqueous electrolyte are accommodated in a battery case, the production method comprising:
obtaining a battery assembly by accommodating the positive electrode and the negative electrode in the battery case and further encapsulating the nonaqueous electrolyte into the battery case and sealing the battery case, the nonaqueous electrolyte being obtained by dissolving a lithium salt in a nonaqueous solvent containing γ-butyrolactone as a main component and containing vinylene carbonate and lithium bis(oxalate)borate, and
subjecting the battery assembly to an initial charge process performed, thereby forming a coat derived from the vinylene carbonate on the surface of the negative electrode active material layer and forming, on the surface of the positive electrode active material layer, a coat derived from bis(oxalate)borate ions generated by ionization of the lithium bis(oxalate)borate.
